# EUROPEAN PATENT APPLICATION

(11) **EP 4 800 619 A1**
(43) Date of publication of application: **02.09.2026**
(21) Application number: 25180105.6
(22) Date of filing: 02.06.2025
(51) Int. Cl.: G06Q 10/087

(54) **SYSTEMS AND METHODS FOR DETERMINING A LOCATION OF A ROBOTIC VEHICLE**

(30) Priority: 28.02.2025 US 202563764733 P
(71) Applicant: AutoStore Technology AS, 5578 Nedre Vats (NO)
(72) Inventor: JOSHI, Parth, 5578 Nedre Vats (NO); FJELDHEIM, Ivar, 5578 Nedre Vats (NO)
(74) Representative: Kilburn & Strode LLP

(57) **Abstract**

The disclosure relates to a method for use in an automated storage and retrieval system, the method comprising: determining that a first robotic vehicle has been involved in a collision or is otherwise lost; and responsive to determining that the first robotic vehicle has been involved in a collision or is otherwise lost, determining, based at least in part on pre-existing data and data captured by the first robotic vehicle, a location of the first robotic vehicle.

## Description

### TECHNICAL FIELD

The disclosure relates to systems and methods for determining a location of a robotic vehicle. More particularly, the disclosure relates to systems and methods for determining that a robotic vehicle has been involved in a collision or is otherwise lost and then determining a location of the robotic vehicle.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

In such an automated storage and retrieval system, it is important to be able to keep track of the locations of the robots, for example in order to be able to determine appropriate routes for robots to travel about the grid, and in order to be able to locate robots that are to be retrieved for maintenance. Knowing the location of a robot is especially important when the robot has become lost or has been involved in a collision, since it is likely that the robot may need to be retrieved for maintenance works and an area of the grid corresponding to the location of the lost or crashed robot may need to be temporarily closed down in order to prevent access to the area by other robots. It is desirable that a determined location of a robot is accurate (e.g., accurate up to one or two cells of the grid), so that the location of the robot can be efficiently identified and the robot quickly retrieved, in order to minimise inactivity time of the robots and to improve a total efficiency of the automated storage and retrieval system.

In view of these and associated problems, one solution is to manually determine a location of a robot that is lost or has been involved in a collision. For example, the grid may temporarily be closed down and a human may manually locate the relevant robot. Alternatively, a location of a robot may be determined based on a last known location of the robot. However, these solutions are not efficient, and are prone to inaccuracies.

### SUMMARY

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 shows a flow chart of a method for determining a location of a robotic container-handling vehicle that has been involved in a collision or is otherwise lost;
Fig. 6 shows a flow chart of a method for capturing images of an automated storage and retrieval system.

### DETAILED DESCRIPTION

The present disclosure will now be described in general terms before implementations of the disclosure are described by way of example with reference to the drawings. The word "may" is used to refer to a feature that is optional, i.e., in some implementations of the disclosure, the feature is present, and in some implementations of the disclosure, the feature is not present.

The present disclosure relates to a method for determining a location of a robot in an automated storage and retrieval system.

The method includes determining that a first robotic vehicle has been involved in a collision or is otherwise lost.

Determining that the first robotic vehicle has been involved in a collision or is otherwise lost may comprise one or more of:
- determining that a movement of the first robotic vehicle does not match an expected movement;
- determining that a speed of the first robotic vehicle does not match an expected speed;
- determining that the first robotic vehicle has not reached a specified grid cell after an expected travel time has elapsed;
- determining that the first robotic vehicle has been involved in a collision or is otherwise lost based on an image, audio or video recording captured by the first or another robotic vehicle;
- determining that one or more components of the first robotic vehicle are not functioning;
- detecting a sound indicative of the first robotic vehicle being involved in a collision or being otherwise lost; and/or
- receiving, by a processing system of the automated storage and retrieval system from the first robotic vehicle, an indication that the robotic vehicle has been involved in a collision or is otherwise lost.

The method also includes determining a location of the first robotic vehicle based at least in part on pre-existing data (e.g., images of the building that comprises the automated storage and retrieval system) and data captured by the first robotic vehicle (e.g., an image of a portion of the building located directly above or to the side of the first robotic vehicle). By using data captured by the first robotic vehicle in conjunction with pre-existing data, the location of the first robotic vehicle may be determined accurately and without human intervention.

The pre-existing data may comprise one or more reference images of the automated storage and retrieval system. The one or more reference images may be arranged to form a mosaic.

The one or more reference images may be captured by a camera on a first robotic vehicle. Capturing the one or more reference images by the first robotic vehicle may comprise: controlling the first robotic vehicle to visit each grid cell of a storage grid of the automated storage and retrieval system, wherein at each grid cell the camera on the first robotic vehicle captures a reference image of the surroundings of the first robotic vehicle; and associating, with each captured reference image and/or each of one or more portions of the mosaic, data indicative of the grid cell from which the reference image was captured.

The data associated with each captured reference image and/or each portion of the mosaic may comprise metadata.

Each of the one or more reference images or one or more portions of the mosaic may be an image of a portion of a roof of a building that comprises the automated storage and retrieval system or an image of a portion of a side wall of the building.

The pre-existing data may be captured using a LIDAR sensor or a distance sensor.

Determining the location of the first robotic vehicle may comprise: capturing, by a camera on the first robotic vehicle, an image of a surroundings of the first robotic vehicle; and determining the location of the first robotic vehicle based at least in part on the captured image and the one or more reference images and/or the mosaic.

Determining the location of the first robotic vehicle based at least in part on the captured image and the one or more reference images and/or the mosaic may comprise: determining that a similarity score between the captured image and a portion of one or more of the reference images or a portion of the mosaic exceeds a threshold; and determining that the location of the first robotic vehicle corresponds to a grid cell associated with the one or more reference images or the portion of the mosaic, or determining that the location of the first robotic vehicle corresponds to a location adjacent to a grid cell associated with the one or more reference images or the portion of the mosaic.

Determining the location of the first robotic vehicle based at least in part on the captured image and the one or more reference images and/or the mosaic may comprise:
- determining a first similarity score between the captured image and a portion of a first reference image of the one or more reference images or a first portion of the mosaic;
- determining a second similarity score between the captured image and a portion of a second reference image of the one or more reference images or a second portion of the mosaic;
- determining that the first similarity score is greater than the second similarity score; and
- responsive to determining that the first similarity score is greater than the second similarity score, determining that the location of the first robotic vehicle corresponds to:
   ∘ the grid cell associated with the first reference image or the first portion of the mosaic, or
   ∘ a location between the grid cell associated with the first reference image or the first portion of the mosaic and the grid cell associated with the second reference image or the second portion of the mosaic.

By determining the location of the first robotic vehicle based on the captured image and a reference image yielding a greatest similarity score, the location of the first robotic vehicle may be accurately determined.

The first similarity score may be a quantity representative of a level of similarity between the captured image and the portion of the first reference image of the one or more reference images or the first portion of the mosaic.

The second similarity score may be a quantity representative of a level of similarity between the captured image and the portion of the second reference image of the one or more reference images or the second portion of the mosaic.

Determining the first similarity score may comprise determining a level of difference between pixel values of the captured image and pixel values of the portion of the first reference image of the one or more reference images or of the first portion of the mosaic.

Determining the first similarity score may also comprise determining a level of difference between one or more pixel colours of the captured image and one or more pixel colours of the portion of the first reference image of the one or more reference images or of the first portion of the mosaic.

Determining the second similarity score may comprise determining a level of difference between pixel values of the captured image and pixel values of the portion of the second reference image of the one or more reference images or of the second portion of the mosaic.

Determining the second similarity score may comprise determining a level of difference between one or more pixel colours of the captured image and one or more colours of the portion of the second reference image of the one or more reference images or of the second portion of the mosaic.

Determining the location of the first robotic vehicle based at least in part on the captured image and the one or more reference images and/or the mosaic may comprise:
- providing the captured image as input to a machine learning model, wherein the machine learning model is trained on the one or more reference images and/or the mosaic and the data associated with the one or more reference images and/or the mosaic; and
- obtaining, as an output of the machine learning model, the location of the first robotic vehicle.

Responsive to determining the location of the first robotic vehicle, the automated storage and retrieval system may be notified to prevent other robotic vehicles from accessing an area of the storage grid, the area comprising the location of the first robotic vehicle. By preventing other robotic vehicles from accessing the area, further potential collisions involving robotic vehicles may be avoided, thereby reducing maintenance work for the automated storage and retrieval system and improving the overall productivity and efficiency of the automated storage and retrieval system.

The present disclosure also relates to a system including a robotic vehicle for use in an automated storage and retrieval system, wherein the system comprises at least one controller arranged to carry out any of the methods described herein.

### Automated storage and retrieval system overview

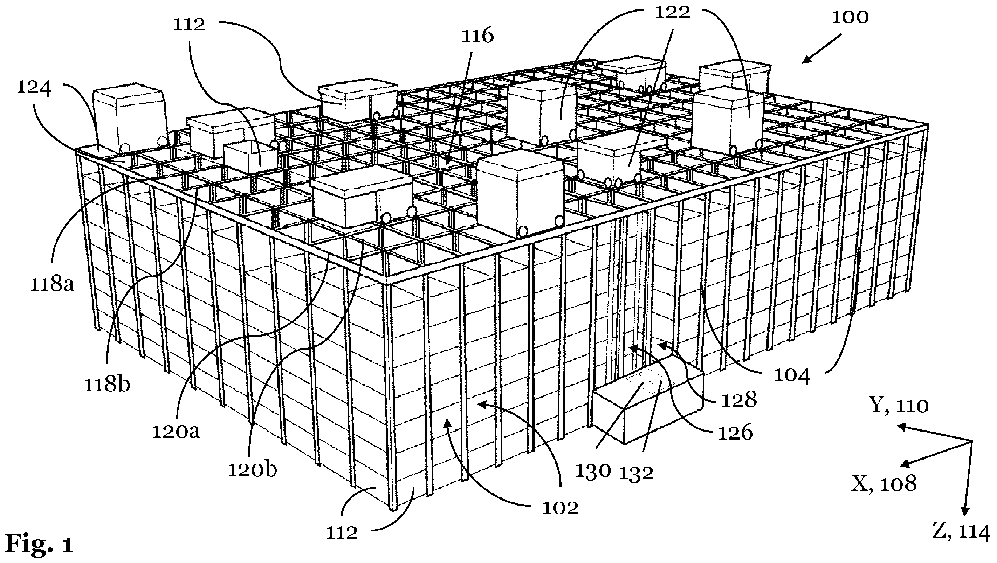

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or 'robot(s)' or 'robotic vehicle(s)', 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off') and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

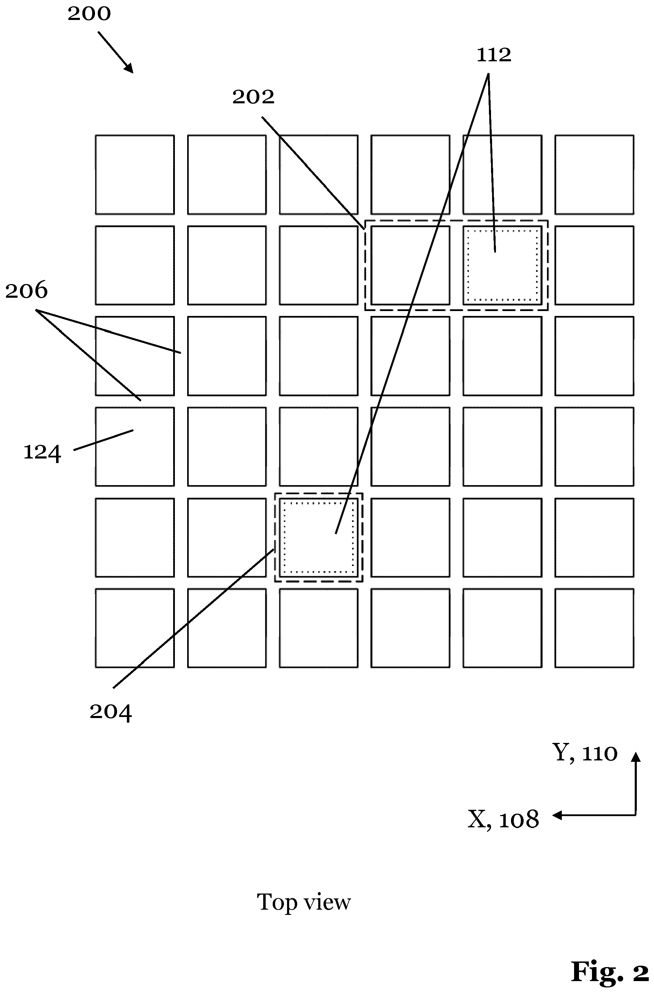

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

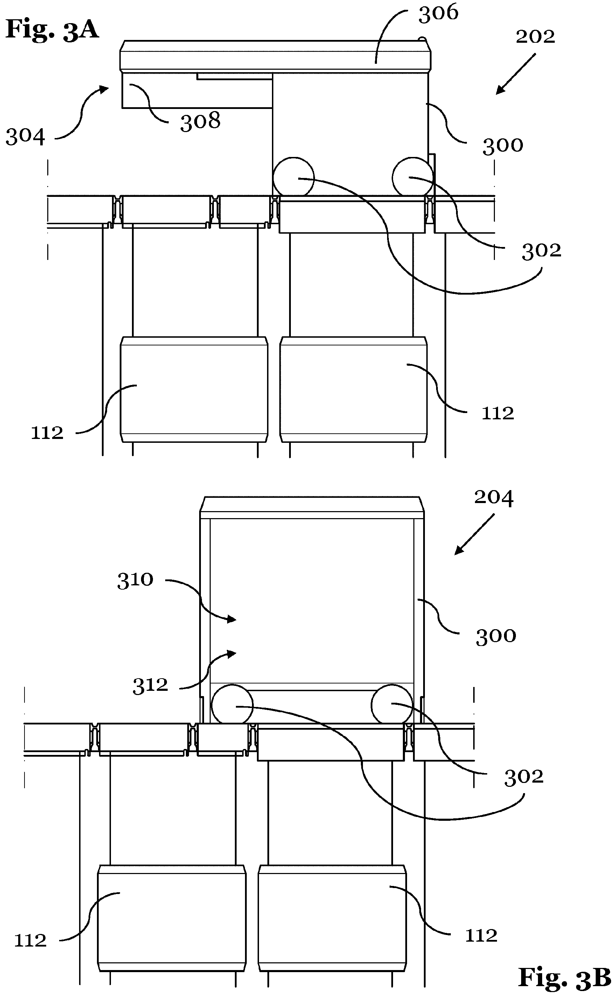

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

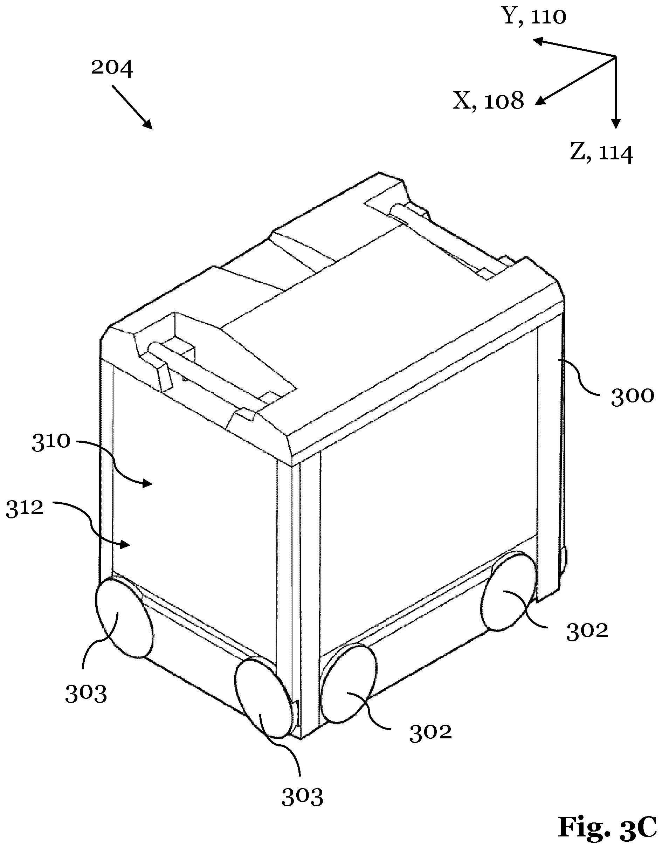

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

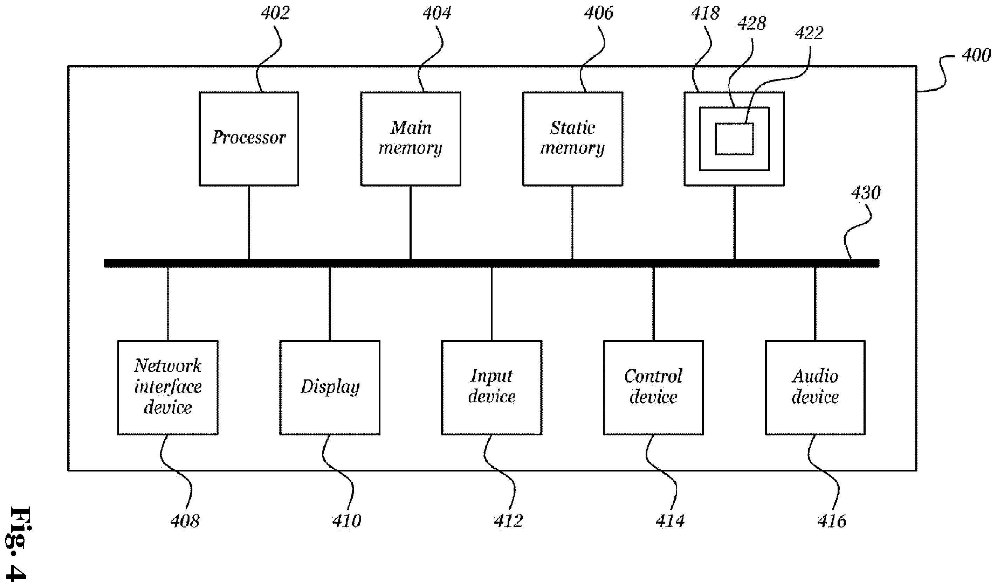

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Determining the location of a robotic container-handling vehicle

As described above, in operation, robots 122 of the automated storage and retrieval system travel along a rail system 116 on top of the grid 100 in order to move to grid cells where bins 112 may be retrieved from and/or added to the grid 100. In practice, there may be many (e.g., tens or hundreds of) robots 122 moving about the rail system 116 at any one time, possibly at high speeds and sometimes in close proximity.

Due to routing errors or mechanical problems for example, it is possible that robots 122 become involved in a collision or otherwise lost. For example, one robot 122 may crash into another robot 122, or a robot 122 may collide with some other obstacle present on the rail system 116 or grid 100 (e.g., an item protruding from a bin 112 stored in the grid 100). A robot 122 may also become improperly situated on the rail system 116, for example if the robot 122 collides with an unexpected object on the rail system 116 or if there is a fault with the wheels 302 of the robot 122 or the rails 118, 120 of the rail system 116 (e.g., if the wheels 302 and/or rails 118, 120 are damaged, misshapen or worn).

In the event that a robot 122 becomes lost or is involved in a collision of any kind, it is important that the location of the robot 122 can be determined so that, for example, the robot 122 can be retrieved (e.g., by a human or robotic operator) for maintenance, and/or so that an area of the grid 100 surrounding the robot 122 can temporarily be closed down in order to prevent access to the area by other robots 122 during maintenance works to the grid 100, rail system 116 and other components of the automated storage and retrieval system.

Information about the location of a robot 122 that has been involved in a collision or is otherwise lost may also be used when routing other robots 122 along the rail system 116 in order to prevent further collisions. For example, the other robots 122 may be routed to avoid an area near (e.g., surrounding) the robot 122 that has been involved in a collision or is otherwise lost.

Obtaining precise location information about a robot 122 that has been involved in a collision or is otherwise lost enables more accurate, timely and efficient maintenance procedures. For example, if it is known that a lost robot 122 or a robot 122 that has been involved in a collision is at a particular grid cell, then the system need only shut down that particular grid cell (possibly along with one or more neighbouring grid cells) instead of a much larger area of the grid 100.

Although known automated storage and retrieval systems may store information about the route along which a robot 122 travels (or is expected to travel), in some cases this route information cannot be solely relied upon for accurate location information. For instance, if a robot 122 is displaced from its route (e.g., to another grid cell or to a position between grid cells) due to a collision, then location information derived from a route stored by the automated storage and retrieval system may be inaccurate. In another example, if the location information is not updated in real-time, then the location information may simply be out of date. It is therefore important that the location of a robot 122 can also be determined through other means. Such other means may also be used to find a robot that has become lost for reasons other than a collision.

With this in mind, the systems and methods described herein relate to determining the location of a robot 122 based at least in part on pre-existing data and data captured by the robot 122.

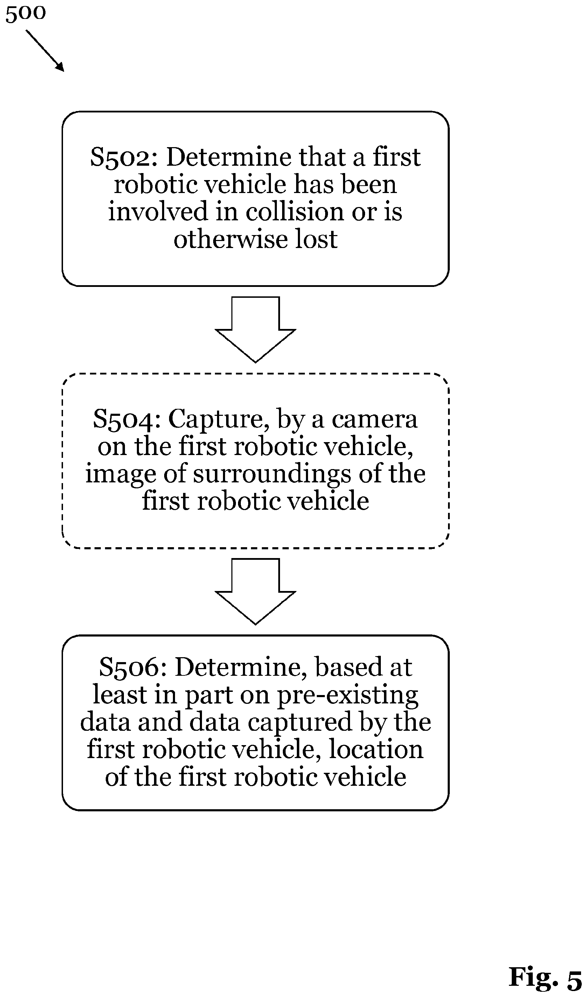

Fig. 5 shows a flow diagram of a method 500 for use in an automated storage and retrieval system.

At step S502, the method 500 determines that a robot 122 has been involved in a collision or is otherwise lost. This determination may be made in several ways. For example, the method 500 may determine that the robot 122 has been involved in a collision or is otherwise lost if:
- the robot 122 is not moving and route information stored by the automated storage and retrieval system or the robot 122 indicates that the robot 122 has not yet reached its destination;
- the robot 122 has not reached its destination after a pre-determined amount of time (e.g., if the robot 122 has not reached its destination after an expected travel time has elapsed, where the expected travel time is possibly based on the length of the route along which the robot 122 is travelling and a typical average speed of the robot 122);

- data (such as an image or an audio or video recording) captured by another robot 122 indicates that the robot 122 has been involved in a collision or is otherwise lost; for example, an image, captured by another robot, may include visual content that, for example, a machine learning algorithm or computer vision system determines as indicating that the robot 122 has been involved in a collision or is otherwise lost;
- one or more components of the robot 122 are not functioning (e.g., if the processing system 400 is unable to communicate with one or more components of the robot 122);
- the robot 122 is moving at a speed different from an expected speed (e.g., the robot 122 is moving more slowly than expected, for example substantially slower than an average speed, or not moving at all);
- a sound detected by the robot 122 indicates that the robot 122 has been involved in a collision or is otherwise lost; for example, an acoustic sensor (such as a microphone) on the robot 122 may continuously record audio, and the presence of an abnormal portion of audio (such as a significantly louder portion, or a portion that does not match a reference audio signal representative of normal functioning of the robot 122) may indicate that the robot 122 has been involved in a collision or is otherwise lost;
- the robot 122 reports to the processing system 400 that it has been involved in a collision or is otherwise lost. In the event that one or more components of the robot 122 (e.g., a communication channel through which the robot receives control instructions) are not functioning, then the robot 122 may report to the processing system 400 that it has been involved in a collision or is otherwise lost by way of a separate communication channel.

Responsive to determining that a robot 122 has been involved in a collision or is otherwise lost, at step S506, the method 500 determines a location of the robot 122 based at least in part on pre-existing data and data captured by the robot 122. To do so, the method 500 may compare the pre-existing data or a portion thereof to the data captured by the robot 122 in order to determine the location of the robot 122. This is described in more detail in the following description.

The pre-existing data may comprise one or more reference images of the automated storage and retrieval system, which may be combined to form a single image or mosaic (e.g., a single image comprising all of the one or more reference images).

Each of the one or more reference images may, for example, be an image of a portion of a roof of a building that contains the automated storage and retrieval system or an image of a portion of a side wall of the building.

The visual content of each reference image may indicate a respective location within the automated storage and retrieval system. For example, the different features of a roof or side wall (e.g., a particular pipe arrangement, windows, markings or other structural or aesthetic features) visible in one or more of the reference images may indicate different locations within the automated storage and retrieval system.

For instance, it may be that an arrangement of two parallel pipes uniquely identifies a position directly above a particular cell of the grid 100. Continuing with this example, in the event that the pipe arrangement does not uniquely identify a position corresponding to a particular cell of the grid 100, the presence of the pipe arrangement may still help narrow down the list of candidate positions.

In this way, a location of the robot 122 may be determined based at least in part on the pre-existing data (e.g., the reference images). The determination of the location of the robot 122 is also based on data captured by the robot 122, as is now described.

Following the determination that the robot 122 has been involved in a collision or is otherwise lost (Step S502) and prior to determining the location of the robot 122 (Step S506), the method 500 may further comprise a step S504 of capturing, by a camera on the robot 122, an image of a surroundings of the robot 122. The image may be captured for example by an upwards-facing camera disposed on the top of the robot 122 or a sideways-facing camera disposed on a side of the robot 122, in order to capture an image of the surroundings directly above or to the side of the robot 122, respectively.

The method 500 may then comprise a step of determining a similarity score between the captured image and (a portion of) one or more of the reference images or a portion of the mosaic. A similarity score may be a numerical representation of how alike two images are in terms of their visual content. For example, a similarity score of 1 (or 100%) may indicate that two images are visually identical, a similarity score of 0 (or 0%) may indicate that two images are visually completely dissimilar, and a similarity score between 0 and 1 (or between 0% and 100%) may indicate that the two images visually overlap but are neither completely identical nor completely dissimilar.

Such a similarity score may be determined in several ways. For instance, a similarity score may be a function of a sum of differences between pixel values (e.g., pixel colour, intensity, luminance, contrast or brightness) of two images. Alternatively, a similarity score may be determined using a histogram-based approach, whereby a histogram is computed for each image, and then the histograms are compared to determine a level of correlation or similarity using metrics such as a correlation metric, Chi-square distance, an intersection metric or a Bhattacharyya distance metric. A similarity score may also be calculated using feature-based approaches such as Scale-Invariant Feature Transform (SIFT) and Speeded-up Robust Features (SURF). The skilled person will appreciate that the similarity score may be determined using any other relevant means.

The location of the robot 122 may be determined at Step S506 in the following way. If it is determined that a similarity score (e.g., calculated in accordance with the above description) between the image captured by the robot 122 and a portion of one or more of the reference images or a portion of the mosaic exceeds a threshold (e.g., 50% or higher, indicating that the two images share a high level of similarity), then the method 500 may determine that the location of the robot 122 corresponds to a grid cell associated with the one or more reference images or the portion of the mosaic.

Alternatively, depending on the similarity score, it may be determined that the location of the robot 122 corresponds to a location adjacent to the grid cell associated with the one or more reference images or the portion of the mosaic. For example, if the image captured by the robot 122 substantially overlaps with a left side of a reference image (e.g., if there is a high similarity score between the image captured by the robot 122 and a left portion of the reference image), then it may be determined that the location of the robot 122 corresponds to a position to the left of the grid cell associated with the reference image.

A similarity score may be determined for multiple reference images (e.g., all of the reference images comprised by the pre-existing data), and the location of the robot 122 can be determined to correspond to the grid cell associated with the reference image that yields the greatest similarity score. For example, if there are four references images, A, B, C and D, each associated with grid cells at coordinates (1,1), (2,1), (3,1) and (4,1) respectively, and the similarity scores between the respective image and the captured image are 50%, 90%, 50% and 0% respectively, then it may be determined that the location of the robot 122 corresponds to the grid cell with coordinates (2,1), since the reference image captured at this grid cell yields the greatest similarity score of 90%. Thus, in more general terms, the method 500 may comprise: determining a first similarity score between the captured image and a portion of a first reference image (e.g., image A) or a first portion of the mosaic; determining a second similarity score between the captured image and a portion of a second reference image (e.g., image B) or a second portion of the mosaic; determining that the first similarity score is greater than the second similarity score (e.g., similarity score 90% is greater than similarity score 50%); and responsive to this determination, determining that the location of the robot 122 corresponds to the grid cell associated with the first reference image (e.g., the grid cell from which image A was captured) or the first portion of the mosaic, or a location between the grid cell associated with the first reference image or the first portion of the mosaic and the grid cell associated with the second reference image or the second portion of the mosaic.

Once a location of the robot 122 that has been involved in a collision or is otherwise lost has been determined, the automated storage and retrieval system may be notified of the location of the robot 122. In response, an area of the grid 100 may be temporarily closed down, that is, isolated from operation, in order to prevent access to the area by other robots 122, for example in order to prevent further collisions, and so that the robot 122 involved in the collision or otherwise lost may be retrieved for maintenance or that maintenance works may be performed on the grid 100 or the rail system 116 at the area.

In particular, an area of the grid 100 encompassing the determined location of the robot 122 may be closed down. For example, if it is determined that a robot 122 that has been involved in a collision or is otherwise lost is located at a grid cell with coordinates (2,2), then an area of the grid 100 corresponding to grid cells with the following coordinates may be temporarily closed down: (1,1), (2,1), (3,1), (1,2), (2,2), (3,2), (1,3), (2,3), (3,3). In this example, a 3-by-3 grid centred at the location of the robot 122 is temporarily closed down, although the skilled person will appreciate that other configurations of the grid 100 (such as areas defined by squares of other sizes, or rectangles, or any other suitable shape) may also be closed down.

### Capturing images of an automated storage and retrieval system

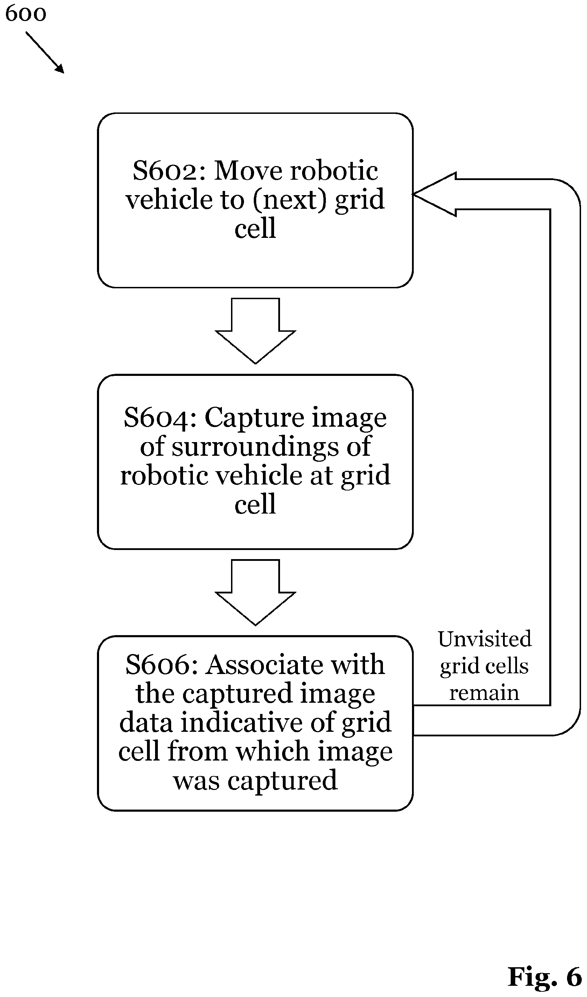

The reference images referred to above may be obtained by a robot 122 of the automated storage and retrieval system, for example in accordance with the method 600 depicted in Fig. 6, which is now described.

At step S602, the robot 122 moves to a grid cell of the grid 100. If the robot 122 is to visit every grid cell of the grid 100, then this starting grid cell may be an arbitrary cell of the grid 100, or, alternatively, the robot 122 may remain in its current grid cell (i.e., the grid cell in which the robot 122 is currently positioned is taken to be the starting grid cell). If however the robot 122 is only to visit a subset of grid cells of the grid 100, then the starting grid cell may be chosen from the subset of grid cells.

Next, at step S604, the robot 122 captures an image of the surroundings of the robot 122 at the grid cell.

For example, an upward-facing camera disposed on top of the robot 122 may capture an image of the portion of the roof of the building containing the automated storage and retrieval system that is directly above the grid cell where the robot 122 is currently located. Additionally or alternatively, a sidewards-facing camera disposed on a side of the robot 122 may capture an image of the portion of a side wall of the building that is visible from the position of the robot 122. As the skilled person will appreciate, instead of or in addition to a camera, many other types of optical sensor may be used, such as a LIDAR sensor, a distance sensor, a contrast sensor, a colour sensor, or an illuminance sensor.

After step S604, the method 600 proceeds to step S606. At step S606, data indicative of the grid cell from which the image was captured by the robot 122 is associated with the image.

The associated data may be indicative of a location of the grid cell from which the image was captured, for example in the form of coordinates or a unique identifier (e.g., a label, name, number or tag) assigned to each grid cell. For example, if the image was captured while the robot 122 was located at a top-left cell of the grid 100, then the data associated with the image indicates that the image was captured at the top-left cell of the grid, e.g., by way of coordinates or any other unique identifier.

Following Step S606, the method 600 returns to Step S602, where the robot 122 moves to another grid cell and the above-described steps are repeated until all desired grid cells (e.g., all or only a subset of the grid cells of the grid 100) have been visited. The next grid cell may be chosen in such a way that the robot 122 traverses the grid 100 in a row-by-row (or column-by-column) fashion in order to minimise the distance that the robot 122 is required to travel.

As an alternative to capturing the reference images using a robot 122, the reference images may be captured manually, e.g., by a human at the time of construction or during maintenance of the automated storage and retrieval system.

In embodiments, the reference images and the associated data (e.g., data indicative of locations where the reference images were captured) may be used as training data for a machine learning model, such as a deep neural network or a convolutional neural network. An image (e.g., an image captured by a camera on the robot 122 that has been involved in a collision or is otherwise lost) may then be provided as input to the machine learning model, and the model may provide as an output a location corresponding to the input image. It may then be deduced that the robot 122 is at the location that was output by the machine learning model.

Any of the above-described methods may be performed at least in part by a system including a robotic container-handling vehicle of an automated storage and retrieval system. The system includes at least one controller arranged to perform any of the methods described herein. The at least one controller may take the form of those described with reference to Fig. 4.

### Penultimate comments

Each possible combination of any of the above-described features forms part of the present disclosure. A plurality of instances of any feature may also be present.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A method for use in an automated storage and retrieval system, the method comprising:
determining that a first robotic vehicle has been involved in a collision or is otherwise lost; and
responsive to determining that the first robotic vehicle has been involved in a collision or is otherwise lost, determining, based at least in part on pre-existing data and data captured by the first robotic vehicle, a location of the first robotic vehicle.

2. The method of claim 1, wherein the pre-existing data comprises one or more reference images of the automated storage and retrieval system; and optionally, wherein the one or more reference images are arranged to form a mosaic.

3. The method of claim 2, wherein the one or more reference images are captured by a camera on the first or another robotic vehicle.

4. The method of claim 3, wherein capturing the one or more reference images by the first or the other robotic vehicle comprises:
controlling the first or the other robotic vehicle to visit each grid cell of a storage grid of the automated storage and retrieval system, wherein at each grid cell the camera on the first or the other robotic vehicle captures a reference image of the surroundings of the first or the other robotic vehicle; and
associating, with each captured reference image and/or each of one or more portions of the mosaic, data indicative of the grid cell from which the reference image was captured; and optionally, wherein the data associated with each captured reference image and/or each portion of the mosaic comprises metadata.

5. The method of any of claims 2-4, wherein determining the location of the first robotic vehicle comprises:
capturing, by a camera on the first robotic vehicle, an image of a surroundings of the first robotic vehicle; and
determining the location of the first robotic vehicle based at least in part on the captured image and the one or more reference images and/or the mosaic.

6. The method of claim 5, wherein determining the location of the first robotic vehicle based at least in part on the captured image and the one or more reference images and/or the mosaic comprises:
determining that a similarity score between the captured image and a portion of one or more of the reference images or a portion of the mosaic exceeds a threshold; and
determining that the location of the first robotic vehicle corresponds to a grid cell associated with the one or more reference images or the portion of the mosaic, or determining that the location of the first robotic vehicle corresponds to a location adjacent to a grid cell associated with the one or more reference images or the portion of the mosaic.

7. The method of claim 5 or 6, wherein determining the location of the first robotic vehicle based at least in part on the captured image and the one or more reference images and/or the mosaic comprises:
determining a first similarity score between the captured image and a portion of a first reference image of the one or more reference images or a first portion of the mosaic;
determining a second similarity score between the captured image and a portion of a second reference image of the one or more reference images or a second portion of the mosaic;
determining that the first similarity score is greater than the second similarity score; and
responsive to determining that the first similarity score is greater than the second similarity score, determining that the location of the first robotic vehicle corresponds to:
the grid cell associated with the first reference image or the first portion of the mosaic, or
a location between the grid cell associated with the first reference image or the first portion of the mosaic and the grid cell associated with the second reference image or the second portion of the mosaic.

8. The method of claim 7, wherein:
the first similarity score is a quantity representative of a level of similarity between the captured image and the portion of the first reference image of the one or more reference images or the first portion of the mosaic, and/or
the second similarity score is a quantity representative of a level of similarity between the captured image and the portion of the second reference image of the one or more reference images or the second portion of the mosaic; and optionally,
wherein determining the first similarity score comprises determining a level of difference between pixel values of the captured image and pixel values of the portion of the first reference image of the one or more reference images or of the first portion of the mosaic, and/or
wherein determining the second similarity score comprises determining a level of difference between pixel values of the captured image and pixel values of the portion of the second reference image of the one or more reference images or of the second portion of the mosaic.

9. The method of claim 8, wherein determining the first similarity score comprises determining a level of difference between one or more pixel colours of the captured image and one or more pixel colours of the portion of the first reference image of the one or more reference images or of the first portion of the mosaic, and/or
wherein determining the second similarity score comprises determining a level of difference between one or more pixel colours of the captured image and one or more colours of the portion of the second reference image of the one or more reference images or of the second portion of the mosaic

10. The method of claim 5 or 6, wherein determining the location of the first robotic vehicle based at least in part on the captured image and the one or more reference images and/or the mosaic comprises:
providing the captured image as input to a machine learning model, wherein the machine learning model is trained on the one or more reference images and/or the mosaic and the data associated with the one or more reference images and/or the mosaic; and
obtaining, as an output of the machine learning model, the location of the first robotic vehicle.

11. The method of any of claims 2-10, wherein each of the one or more reference images or one or more portions of the mosaic is an image of a portion of a roof of a building that comprises the automated storage and retrieval system or an image of a portion of a side wall of the building.

12. The method of any preceding claim, wherein the pre-existing data is captured using a LIDAR sensor or a distance sensor.

13. The method of any preceding claim, further comprising:
responsive to determining the location of the first robotic vehicle, notifying the automated storage and retrieval system to prevent other robotic vehicles from accessing an area of the storage grid, the area comprising the location of the first robotic vehicle.

14. The method of any preceding claim, wherein determining that the first robotic vehicle has been involved in a collision or is otherwise lost comprises one or more of:
determining that a movement of the first robotic vehicle does not match an expected movement;
determining that a speed of the first robotic vehicle does not match an expected speed;
determining that the first robotic vehicle has not reached a specified grid cell after an expected travel time has elapsed;
determining that the first robotic vehicle has been involved in a collision or is otherwise lost based on an image, audio or video recording captured by the first or another robotic vehicle;
determining that one or more components of the first robotic vehicle are not functioning;
detecting a sound indicative of the first robotic vehicle being involved in a collision or being otherwise lost; and/or
receiving, by a processing system of the automated storage and retrieval system from the first robotic vehicle, an indication that the first robotic vehicle has been involved in a collision or is otherwise lost.

15. A system including a robotic vehicle for use in an automated storage and retrieval system, wherein the system comprises at least one controller arranged to carry out a method according to any preceding claim.
